(19) Europäisches Patentamt European Patent Office Office européen des brevets

(11) **EP 4 231 276 A1**

(12) **EUROPEAN PATENT APPLICATION**
published in accordance with Art. 153(4) EPC

(43) Date of publication:
**23.08.2023 Bulletin 2023/34**

(21) Application number: **20957740.2**

(22) Date of filing: **16.10.2020**

(51) International Patent Classification (IPC):
**G09C 1/00** (2006.01)          **G06N 20/00** (2019.01)

(52) Cooperative Patent Classification (CPC):
**G06N 20/00; G09C 1/00**

(86) International application number:
**PCT/JP2020/039127**

(87) International publication number:
**WO 2022/079911 (21.04.2022 Gazette 2022/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nippon Telegraph And Telephone Corporation**
**Chiyoda-ku**
**Tokyo 100-8116 (JP)**

(72) Inventor: **HAMADA, Koki**
**Musashino-shi, Tokyo 180-8585 (JP)**

(74) Representative: **Murgitroyd & Company**
**Murgitroyd House**
**165-169 Scotland Street**
**Glasgow G5 8PL (GB)**

(54) **HIDDEN DECISION TREE TEST DEVICE, HIDDEN DECISION TREE TEST SYSTEM, HIDDEN DECISION TREE TEST METHOD, AND PROGRAM**

(57)     A secret decision tree test device according to an embodiment configured to evaluate a division condition at each of a plurality of nodes of a decision tree when learning of the decision tree is performed by secret calculation, the secret decision tree test device, includes: an input unit configured to input a category attribute value vector composed of specific category attribute values of items of data included in a data set for learning of the decision tree, a label value vector composed of label values of the items of the data, and a group information vector indicating grouping of the items of the data into the nodes; a frequency calculation unit configured to calculate, using the category attribute value vector, the label value vector, and the group information vector, a first frequency of data belonging to each group, a second frequency of data for each of the label values in said each group, a third frequency of data belonging to a division group obtained by dividing said each group by a division condition indicating a condition whether the category attribute value is included in a predetermined set, and a fourth frequency of data for each of the label values in the division group; and an evaluation calculation unit configured to calculate an evaluation value for evaluating the division condition using the first frequency, the second frequency, the third frequency, and the fourth frequency.

Fig. 3

## Description

[Technical Field]

The present invention relates to a secret decision tree test device, a secret decision tree test system, a secret decision tree test method, and a program.

[Background Art]

As a method of obtaining a specific operation result without restoring encrypted numerical values (for example, NPL 1), a method called secret calculation has been known. In the method described in NPL 1, by performing encryption in which numerical fragments are distributed to three secret calculation devices, and having three secret calculation devices perform cooperative calculation, results of addition/subtraction, constant addition, multiplication, constant multiplication, a logical operation (negation, logical AND, logical OR, exclusive OR), data format conversion (integers and binary digits), and the like can be obtained in a state of being distributed to the three secret calculation device without restoring numerical values.

Meanwhile, when learning a decision tree from a given data set, a method of calculating an evaluation value when the data set is divided at each node by the attribute value of each item of data and adopting division that maximizes the evaluation value has been well known.

[Citation List]

[Non Patent Literature]

[NPL 1] Koji Chida, Koki Hamada, Dai Ikarashi, Katsumi Takahashi, "Reconsideration of Light-Weight Verifiable Three-Party Secret Function Calculation," In CSS, 2010

[Summary of Invention]

[Technical Problem]

However, in a case where learning of a decision tree is performed by secret calculation, the calculation time may increase. For example, in a case where a data set composed of n items of data is divided by a decision tree having m nodes, $\Theta$ (mn) evaluations (tests) are required in order to conceal the number of items of data classified at each node when evaluation values are calculated at all the nodes.

One embodiment of the present invention was made in view of the above points, and has an object to reduce the calculation time in a case where learning of a decision tree is performed by secret calculation.

[Solution to Problem]

In order to achieve the above object, a secret decision tree test device according to an embodiment configured to evaluate a division condition at each of a plurality of nodes of a decision tree when learning of the decision tree is performed by secret calculation, the secret decision tree test device, includes: an input unit configured to input a category attribute value vector composed of specific category attribute values of items of data included in a data set for learning of the decision tree, a label value vector composed of label values of the items of the data, and a group information vector indicating grouping of the items of the data into the nodes; a frequency calculation unit configured to calculate, using the category attribute value vector, the label value vector, and the group information vector, a first frequency of data belonging to each group, a second frequency of data for each of the label values in said each group, a third frequency of data belonging to a division group obtained by dividing said each group by a division condition indicating a condition whether the category attribute value is included in a predetermined set, and a fourth frequency of data for each of the label values in the division group; and an evaluation calculation unit configured to calculate an evaluation value for evaluating the division condition using the first frequency, the second frequency, the third frequency, and the fourth frequency.

[Advantageous Effects of Invention]

It is possible to reduce the calculation time in a case where learning of a decision tree is performed by secret calculation.

[Brief Description of Drawings]

[Fig. 1]

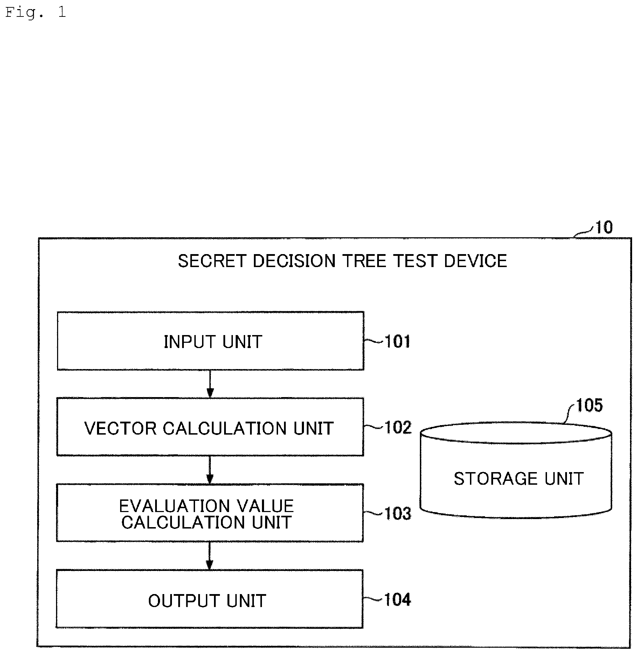

Fig. 1 is a diagram illustrating an example of a functional configuration of a secret decision tree test device according to a present embodiment.
[Fig. 2]

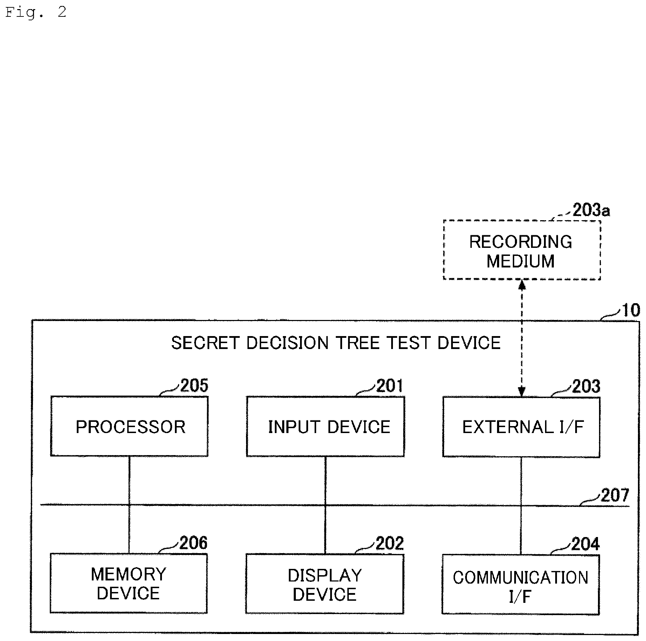

Fig. 2 is a diagram illustrating an example of a hardware configuration of the secret decision tree test device according to the present embodiment.
[Fig. 3]

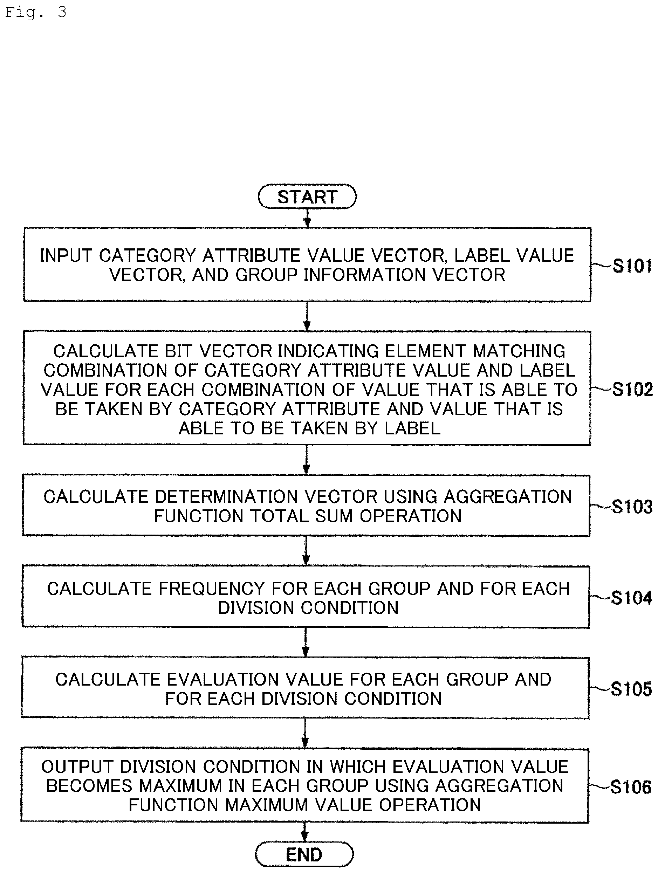

Fig. 3 is a flowchart illustrating an example of a flow of a secret decision tree test process according to the present embodiment.

[Description of Embodiments]

Hereinafter, an embodiment of the present invention will be described. In the present embodiment, a secret decision tree test device 10 capable of efficiently performing evaluation (a test) at each node for an attribute taking a category value when learning of a decision tree is performed by secret calculation (that is, when learning of a decision tree is performed without revealing input and output) will be described. The secret decision tree test device 10 according to the present embodiment can reduce the total calculation time by collectively calculating evaluation values of a plurality of division conditions at each node of a decision tree as will be described later. Note that, in the present embodiment, a decision tree in which input and output are concealed using secret calculation is also referred to as a secret decision tree.

<Notation>

First, various notations will be described. Note that notations which are not necessarily used in the present embodiment are also described below.
A value obtained by concealing a certain value a through encryption, secret sharing, or the like is called a secret value of a, and is denoted as [a]. In a case where a is concealed by secret sharing, [a] refers to a set of fragments of secret sharing which are possessed by each secret calculation device.

• Restoration

A process of inputting the secret value [a] of a and calculating a value c having a relation of c = a is denoted as follows:
c←Open ([a])

•Arithmetic operations

Operations of addition, subtraction, and multiplication take the secret values [a] and [b] of two values a and b as inputs, and calculate the secret values $[c_1]$, $[c_2]$, and $[c_3]$ of calculation results $c_1$, $c_2$, and $c_3$ of a + b, a - b, and ab. Execution of the operations of addition, subtraction, and multiplication are denoted, respectively, as follows:

$[c_1$←Add([a], [b])
$[c_2]$←Sub([a], [b])
$[c_3]$←Mul([a], [b])

In a case where there is no concern of misunderstanding, Add([a], [b]), Sub([a], [b]), and Mul([a], [b]) are abbreviated as [a] + [b], [a] - [b], and [a] $\times$ [b], respectively.

•Comparison

Operations of comparison take the secret values [a] and [b] of two values a and b as inputs, and calculate the secret values $[c_1]$, $[c_2]$, and $[c_3]$ of a Boolean value c $\square$ {0, 1} of a = b, a $\leq$ b, and a < b. The Boolean value is 1 when it is true and 0 when it is false. Execution of the comparison operations of a = b, a $\leq$ b, and a < b are denoted, respectively, as follows:

$[c_1]\leftarrow EQ([a], [b])$
$[c2]\leftarrow LE([a], [b])$
$[c_3]\leftarrow LT([a], [b])$

•Selection

An operation of selection takes the secret value [c] of a Boolean value c □ {0, 1} and the secret values [a] and [b] of two values a and b as inputs, and calculates the secret value [d] of d satisfying the following formula:

[Math. 1]

$$d = \begin{cases} a & \text{if } c = 1 \\ b & \text{otherwise} \end{cases}$$

The execution of this operation is denoted as follows:
$[d]\leftarrow IfElse([c], [a], [b])$
This operation can be implemented as follows:

$$[d]\leftarrow[c] \times ([a] - [b]) + [b]$$

<Decision tree>

A decision tree is a directed graph that expresses knowledge about a certain attribute of data by a combination of rules with a tree structure. In addition, such attributes include an attribute called an objective variable and an attribute called an explanatory variable, and the decision tree uses the attribute value of an explanatory variable as an input and predicts and outputs the attribute value of an objective variable. The decision tree includes one or more nodes, and each node other than a leaf is set with a division rule (division condition) regarding explanatory variables such as, for example, "age is less than 30 years." On the other hand, the attribute value of an objective variable is set in a leaf (that is, a node at an end of the decision tree).
In response to receiving an attribute value of the explanatory variable, the decision tree first determines a division condition at the node of the root, and then, transitions to one of the child nodes in accordance with the determination result of the division condition. Thereafter, determination of a division condition at each node and transition to the child node are recursively repeated, and an attribute value allocated to the finally reached leaf is output as the prediction value of the objective variable.

•Learning algorithm of decision tree

For example, CART, ID3, C4.5, and the like are known as algorithms for learning a decision tree from a set of data composed of explanatory variables and objective variables. Although these algorithms differ in detail, these all learn a decision tree by recursively dividing a data set so as to greedily maximize a certain objective function from the root to the leaves (Steps 1 to 8 to be described later). In addition, an input to the algorithm is a data set Q = (X, y), and an output is a decision tree represented as a directed graph from the root to the leaf. Hereinafter, each item of data included in the data set is also referred to as a record. Note that, for example, the data set may be referred to as "data set for training" or "teaching data set," and each item of data included in the data set may be referred to as "training learning", "teaching data", or the like.
Here, X is a matrix having attribute values of the explanatory variables of each record as elements, and is represented by, for example, a matrix in which the total number of records is the number of rows and the total number of explanatory variables is the number of columns. In addition, y is a vector having attribute values of the objective variables of each record as elements, and is represented by, for example, a vertical vector in which the attribute value of the objective variable of the n-th record of X is an n-th element.

Note that, as described above, a division condition is set at each node other than a leaf of the decision tree, and an attribute value of the objective variable is set at a leaf. In addition, both the objective variable and the explanatory variable are assumed to take category values, the objective variable is also referred to as a label, and its value (attribute value) is also referred to as a label value. In addition, hereinafter, an explanatory variable that takes a category value is also referred to as a category attribute (that is, in a case where it is expressed as a "category attribute", it indicates an explanatory variable that takes a category value), and its value is also referred to as a category attribute value. The decision tree in a case where the objective variable is a numerical value is also called a regression tree.

Step 1: a node v is created.

Step 2: when the end condition of division is satisfied, the attribute value of the objective variable is set at the node v, and output as a leaf, and the process ends. In this case, the attribute value (label value) which is set at the node v is, for example, a value that appears most frequently among the values of the elements included in y. Note that examples of the end condition include all the elements included in y having the same value (that is, all the attribute values of the objective variables being the same), the decision tree having reached a height determined in advance, and the like.

Step 3: when the end condition of division is not satisfied, division conditions $r_1$, $r_2$, $\cdots$ that can be applied to the node v are listed.

Step 4: an evaluation value $s_i$ of each division condition $r_i$ is calculated by the objective function.

Step 5: the division condition r* that takes the maximum evaluation value is selected from a set $\{r_i\}$ of division conditions, and the division condition r* is set at the node v.

Step 6: a data set (X, y) is divided into data sets $(X_1, y_1)$, $(X_2, y_2)$, $\cdots$, $(X_d, y_d)$ on the basis of the division condition r*. In other words, this means that records included in the data set (X, y) are classified into the data sets $(X_1, y_d)$, $(X_2, y_2)$, $\cdots$, $(X_d, y_d)$ on the basis of the division condition r*. Note that d is the number of branches (that is, the number of children held by one node).

Step 7: Steps 1 to 7 are recursively executed for each $(X_j, y_j)$. That is, each $(X_j, y_j)$ is regarded as (X, y), and a function, a method, or the like of executing Steps 1 to 7 is called. Here, when a node v is created in Step 1 executed recursively, a branch is spanned with the node v created in the calling Step 1. Note that the node v created in the calling Step 1 is a parent, and the node v created in the called Step 1 is a child.

Step 8: when the execution of Steps 1 to 7 for all the data sets $(X_j, y_j)$ is ended (that is, the execution of all Steps 1 to 7 called recursively is ended), the set of nodes v (and the division condition r set at each node v) and the set of branches between the nodes are output, and the process ends. The set of these nodes v and the set of branches are the decision tree.

•Number of branches

Although the number of branches d can be any integer value greater than or equal to 2, in the present embodiment, a binary tree is assumed and d = 2 is set. Note that, although the present embodiment can also be applied to a case where d is greater than or equal to 3, the calculation time becomes longer as the value of d increases.

•Division condition

Although any condition for the attribute value of the explanatory variable can be used as the division condition, in general, a condition such as magnitude comparison or inclusion in a certain set is often used. In the present embodiment, since the explanatory variable takes a category value, the division condition is belonging to a certain set (for example, X is a set, x is a category attribute value, x $\Box$ X, or the like). Note that the division condition may be referred to as, for example, a division rule, a classification condition, a classification rule, or the like.

•Index of purity

As an index for measuring the quality of division (or classification) when a certain data set is divided into a plurality of data sets (in other words, records included in a certain data set is classified into a plurality of data sets), an index of purity H(·) indicating whether the data set is ambiguous has been known. Examples of indices which are often used include a gini coefficient, entropy, and the like.

In the data set Q, a set of records in which the attribute value (that is, label value) of the objective variable is k is denoted as $Q_k$. In this case, the ratio of records of the label value k at a node that takes the data set Q as input is defined as follows:

[Math. 2]

$$p_k := \frac{|Q_k|}{|Q|}$$

In the present embodiment, the following entropy is used as the index of purity.

[Math. 3]

$$H(Q) = -\sum_k p_k \log_2 p_k$$

•Objective function

The quality of each division condition is evaluated by the objective function (that is, the value of the objective function is the evaluation value of the division condition). Examples of the objective function which are often used include an amount of mutual information, a gain factor, and the like.

It is assumed that, denoting a division condition as θ, the data set Q is divided into two data sets Q(θ, 0) and Q(θ, 1), under a certain division condition θ. In this case, GainRatio() defined by the following formula is called a gain factor.

[Math. 4]

$$p_i(Q,\theta) := \frac{|Q(\theta,i)|}{|Q|}$$

$$G(Q,\theta) := \sum_i p_i(Q,\theta) H(Q(\theta,i))$$

$$\mathsf{Gain}(Q,\theta) := H(Q) - G(Q,\theta)$$

$$\mathsf{SplitInfo}(Q,\theta) := -\sum_i p_i(Q,\theta) \log_2 p_i(Q,\theta)$$

$$\mathsf{GainRatio}(Q,\theta) := \frac{\mathsf{Gain}(Q,\theta)}{\mathsf{SplitInfo}(Q,\theta)}$$

In the present embodiment, the gain factor is used as an objective function.

<Calculation of evaluation value>

The division condition of each node is set by selecting such a division condition that a predetermined objective function is maximized at the node. Since it is necessary to calculate the value of the objective function for each candidate for the division condition, it is important to be able to efficiently calculate the value of the objective function for the given division condition.

The gain factor defined by Math. 4 needs to be calculated intricately to obtain the frequency of the value of each label (the value of the objective variable) after the division has been performed actually. Consequently, in the present embodiment, a method of calculating a gain factor is reformulated and simplified so that the gain factor can be collectively calculated for a plurality of division conditions by secret calculation.

In order to simplify the calculation of the gain factor, attention is focused on many ratios being required for the gain factor. Since a ratio requires division, the calculation cost is increased when the calculation is performed as it is; however, it can be converted into a statistic easy to calculate such as frequency by multiplying by the total number. Based on this observation, in the present embodiment, the functions of SplitInfo$^+$, H$^+$, Gain$^+$, and G$^+$ multiplied by the size of the input data set are used instead of the functions of SplitInfo, H, Gain, and G.

For simplicity, when using the following formula,

[Math. 5]

$$f(x) := x \log_2 x$$

SplitInfo$^+$ can be reformulated as follows:

[Math. 6]

$$
\begin{aligned}
\mathsf{SplitInfo}^+(Q,\theta) \ &:= \ |Q|\,\mathsf{SplitInfo}(Q,\theta) \\
&= \ -\sum_i |Q(\theta,i)| \log_2(|Q(\theta,i)|/|Q|) \\
&= \ -\sum_i |Q(\theta,i)|(\log_2 |Q(\theta,i)| - \log_2 |Q|) \\
&= \ |Q| \log_2 |Q| - \sum_i |Q(\theta,i)| \log_2 |Q(\theta,i)| \\
&= \ f(|Q|) - \sum_i f(|Q(\theta,i)|)
\end{aligned}
$$

Similarly, H$^+$ can be reformulated as follows:

[Math. 7]

$$
\begin{aligned}
H^+(Q) \quad &:= \quad |Q|H(Q) \\
&= \quad -|Q|\sum_k p_k \log_2 p_k \\
&= \quad -\sum_k |Q_k|(\log_2 |Q_k| - \log_2 |Q|) \\
&= \quad |Q| \log_2 |Q| - \sum_k |Q_k| \log_2 |Q_k| \\
&= \quad f(|Q|) - \sum_k f(|Q_k|)
\end{aligned}
$$

Similarly, G[+] can be reformulated as follows:

[Math. 8]

$$
\begin{aligned}
G^+(Q,\theta) \quad &:= \quad |Q|\sum_i p_i(Q,\theta)H(Q(\theta,i)) \\
&= \quad \sum_i |Q(\theta,i)|H(Q(\theta,i)) \\
&= \quad \sum_i H^+(Q(\theta,i))
\end{aligned}
$$

In addition, similarly, Gain[+] can be reformulated as follows:

[Math. 9]

$$
\begin{aligned}
\mathsf{Gain}^+(Q,\theta) \quad &:= \quad |Q|\,\mathsf{Gain}(Q,\theta) \\
&= \quad |Q|H(Q) - |Q|G(Q,\theta) \\
&= \quad H^+(Q) - G^+(Q,\theta)
\end{aligned}
$$

All the above functions of SplitInfo[+], H[+], Gain[+], and G[+] are composed of frequency such as the number of records included in the data set Q or the number of records satisfying a certain condition in the data set Q, f(·), and addition/subtraction. Since GainRatio is as follows,

[Math. 10]

$$\text{GainRatio}(Q,\theta) = \frac{|Q|\,\text{Gain}(Q,\theta)}{|Q|\,\text{SplitInfo}(Q,\theta)} = \frac{\text{Gain}^+(Q,\theta)}{\text{SplitInfo}^+(Q,\theta)}$$

it can be understood that the numerator and denominator of GainRatio of the division condition $\theta$ for the data set Q can be ultimately calculated by the following four quantities:

(1) the number of records $|Q|$ of Q;
(2) the number of records $|Q_k|$ of a label value k in Q;
(3) the number of records $|Q(\theta, i)|$ of each item of data set obtained by dividing Q by $\theta$; and
(4) the number of records $|Q(\theta, i)_k|$ of the label value k in each item of data set obtained by dividing Q by $\theta$,

together with f($\cdot$) and addition/subtraction.

The input of f($\cdot$) is one of the above-described four frequencies (the numbers of records $|Q|$, $|Q_k|$, $|Q(\theta, i)|$, and $|Q(\theta, i)_k|$). Therefore, in a case where the number of records of the data set given as data set for learning is n, the input of f($\cdot$) is always an integer 0 or greater and n or less. Thus, in a case where concealment is performed by secret sharing, f($\cdot$) can implement $\Theta(n)$ calculations of f($\cdot$) with the amount of communication of O(nlogn) by using a secret batch mapping using a correspondence table (look-up table) listing the following correspondence of the magnitude $\Theta(n)$.

[Math. 11]

$$[0, n] \ni x \mapsto x \log x$$

Thereby, in the present embodiment, by calculating each frequency at each node when learning the secret decision tree, it is possible to collectively calculate the evaluation values (GainRatio) of a plurality of division conditions at each node.

In addition, the result of comparison of two values (a, b) and (c, d) each given as a pair of a numerator and a denominator being non-negative is equal to the result of comparison of ad and bc. Since both the numerator and denominator of GainRatio are non-negative, division is avoided by substituting the above method when comparison of GainRatio (that is, comparison of the evaluation values) is performed. Thereby, it is possible to reduce the calculation time required for the comparison of the evaluation values for selecting the division condition that takes the maximum evaluation value.

<Functional configuration>

Next, a functional configuration of the secret decision tree test device 10 according to the present embodiment will be described with reference to Fig. 1. Fig. 1 is a diagram illustrating an example of the functional configuration of the secret decision tree test device 10 according to the present embodiment.

As shown in Fig. 1, the secret decision tree test device 10 according to the present embodiment includes an input unit 101, a vector calculation unit 102, an evaluation value calculation unit 103, an output unit 104, and a storage unit 105.

The storage unit 105 stores various types of data (that is, various types of concealed data) for learning a secret decision tree. Here, it is assumed that these various types of data include a data set given as a data set for learning and a group information vector indicating which node a certain category attribute value is classified (that is, grouped) into. In addition, it is assumed that the data set is composed of a category attribute value vector having the category attribute value of each record as an element and a label value vector having the label value of each record as an element. Note that, in a case where there is a category attribute value vector for each explanatory variable, and the explanatory variables are, for example, "sex" and "prefecture of origin", there are a category attribute value vector having the category value of the sex of each record as an element and a category attribute value vector having the category value of the prefecture of origin of each record as an element.

The input unit 101 inputs a category attribute value vector of a certain category attribute, a label value vector, and a group information vector corresponding to the category attribute as data required for calculating the above evaluation value of Step 4.

The vector calculation unit 102 calculates a vector for determining the division condition (a determination vector to be described later) using the category attribute value vector and the label value vector.

The evaluation value calculation unit 103 calculates a frequency for evaluating the division condition for each group and for each division condition, and calculates the evaluation value (GainRatio) of the division condition on the basis of Math. 10.

The output unit 104 selects a division condition that maximizes the evaluation value in each group, and outputs the selected division condition. Thereby, the division condition to be set at a node corresponding to the group is obtained.

<Hardware configuration>

Next, the hardware configuration of the secret decision tree test device 10 according to the present embodiment will be described with reference to Fig. 2. Fig. 2 is a diagram illustrating an example of the hardware configuration of the secret decision tree test device 10 according to the present embodiment.

As shown in Fig. 2, the secret decision tree test device 10 according to the present embodiment is implemented by a hardware configuration of a general computer or a computer system, and includes an input device 201, a display device 202, an external I/F 203, a communication I/F 204, a processor 205, and a memory device 206. These components of hardware are communicably connected to each other through a bus 207.

The input device 201 is, for example, a keyboard, a mouse, a touch panel, or the like. The display device 202 is, for example, a display or the like. Note that the secret decision tree test device 10 may not have, for example, at least one of the input device 201 and the display device 202.

The external I/F 203 is an interface with an external device such as a recording medium 203a. The secret decision tree test device 10 can execute reading, writing, or the like on the recording medium 203a through the external I/F 203. The recording medium 203a may store, for example, one or more programs for implementing the respective functional units (the input unit 101, the vector calculation unit 102, the evaluation value calculation unit 103, and the output unit 104) included in the secret decision tree test device 10.

Note that examples of the recording medium 203a include a compact disc (CD), a digital versatile disk (DVD), a secure digital (SD) memory card, a universal serial bus (USB) memory card, and the like.

The communication I/F 204 is an interface for connecting the secret decision tree test device 10 to a communication network. Note that one or more programs for implementing the respective functional units included in the secret decision tree test device 10 may be acquired (downloaded) from a predetermined server device or the like through the communication I/F 204.

Examples of the processor 205 include various arithmetic/logic units such as a central processing unit (CPU) and a graphics processing unit (GPU). Each functional unit included in the secret decision tree test device 10 is implemented by, for example, a process of causing the processor 205 to execute one or more programs stored in the memory device 206 or the like.

Examples of the memory device 206 include various storage devices such as a hard disk drive (HDD), a solid state drive (SSD), a random access memory (RAM), a read only memory (ROM), and a flash memory. The storage unit 105 included in the secret decision tree test device 10 can be implemented by using, for example, the memory device 206. Note that the storage unit 105 may be implemented by using, for example, a storage device or the like which is connected to the secret decision tree test device 10 through a communication network.

The secret decision tree test device 10 according to the present embodiment can implement various processes by having the hardware configuration shown in Fig. 2. Note that the hardware configuration shown in Fig. 2 is an example, and the secret decision tree test device 10 may have another hardware configuration. For example, the secret decision tree test device 10 may have a plurality of processors 205, or may have a plurality of memory devices 206.

<Secret decision tree test process>

Next, the secret decision tree test process for calculating the evaluation value in Steps 4 to 5 and selecting the division condition for taking the maximum evaluation value will be described with reference to Fig. 3. Fig. 3 is a flowchart illustrating an example of a flow of the secret decision tree test process according to the present embodiment. Note that a case where a certain category attribute is evaluated (tested) at each node constituting a certain layer of the secret decision tree will be described below. The layer is a set of nodes having the same depth from the root. In addition, it is assumed that a set of values that can be taken by the category attribute is {5, 6, 7, 8} and a set of values that can be taken by the label is {1, 2, 3}.

First, the input unit 101 inputs the category attribute value vector, the label value vector, and the group information vector (Step S101). Hereinafter, as an example, the group information vector is assumed to be as follows:

$$[g] = (0, 0, 1, 1, 0, 0, 0, 1, 0, 1)^T$$

where T is a symbol denoting transposition.

In addition, the category attribute value vector is assumed to be as follows:

$$[c] = (5, 5, 6, 8, 5, 8, 5, 7, 6, 5)^T$$

The label value vector is assumed to be as follows:

$$[y] = (3, 2, 1, 3, 2, 1, 1, 3, 1, 2)^T$$

The group information vector indicates which group each element of the category attribute value vector and the label value vector is classified into, and is a vector in which an element indicating the end of each group is 1 and the other elements are 0 when classified into groups from an element at the head. For example, the above [g] indicates that the first to third elements of the category attribute value vector and the label value vector belong to the first group, the fourth element belongs to the second group, the fifth to eighth elements belong to the third group, and the ninth and tenth elements belong to the fourth group.

Note that each group corresponds to one node, and is a set of elements (category attribute values) classified at the node in the layer one level above (that is, data sets divided by the division condition set at the node in the layer one level above).

Next, the vector calculation unit 102 calculates a bit vector indicating the position of an element matching a combination of the category attribute value and the label value for each combination of the value that can be taken by the category attribute and the value that can be taken by the label (Step S102).

For example, when a bit vector corresponding to a combination of a value "5" that can be taken by the category attribute and a value "1" that can be taken by the label is $[f_{5, 1}]$, this bit vector $[f_{5, 1}]$ is as follows:

$$[f_{5, 1}] = (0, 0, 0, 0, 0, 0, 1, 0, 0, 0)^T$$

Similarly, for example, when a bit vector corresponding to a combination of the value "5" that can be taken by the category attribute and a value "2" that can be taken by the label is $[f_{5, 2}]$, this bit vector $[f_{5, 2}]$ is as follows:

$$[f_{5, 2}] = (0, 1, 0, 0, 1, 0, 0, 0, 0, 1)^T$$

Similarly, for example, when a bit vector corresponding to a combination of the value "5" that can be taken by the category attribute and a value "3" that can be taken by the label is $[f_{5, 3}]$, this bit vector $[f_{5, 3}]$ is as follows:

$$[f_{5, 3}] = (1, 0, 0, 0, 0, 0, 0, 0, 0, 0)^T$$

Bit vectors $[f_{6, 1}]$ to $[f_{6, 3}]$, $[f_{7, 1}]$ to $[f_{7, 3}]$, and $[f_{8, 1}]$ to $[f_{8, 3}]$ corresponding to the other combinations are calculated in the same way.

That is, a bit vector corresponding to a combination of a certain category attribute value and the label value is a vector in which only elements at the position of a combination matching the combination of the category attribute value and the label value among the combinations of elements at the same position in the category attribute value vector and the label value vector are 1 and the other elements are 0.

Next, the vector calculation unit 102 performs an aggregation function total sum operation in accordance with grouping based on the group information vector [g] for each bit vector, and calculates a determination vector (Step S103). Here, the aggregation function total sum operation is an operation of inputting a set of elements in the same group and outputting the total sum of values of the elements.

For example, the vector calculation unit 102 calculates the total sum of the first to third elements for each bit vector, calculates the total sum of the fourth element in the same way, calculates the total sum of the fifth to eighth elements, and calculates the total sum of the ninth to tenth elements. The vector calculation unit 102 creates a determination vector by setting each total sum to be an element at the same position as an element which is a calculation source of the total sum.

Thereby, the following determination vector corresponding to the bit vector $[f_{5,1}]$ is obtained as follows:

$$[c_{5,1}] = (0, 0, 0, 0, 1, 1, 1, 1, 0, 0)^T$$

Similarly, the following determination vector corresponding to the bit vector $[f_{5,2}]$ is obtained as follows:

$$[c_{5,2}] = (1, 1, 1, 0, 1, 1, 1, 1, 1, 1)^T$$

Similarly, the following determination vector corresponding to the bit vector $[f_{5,3}]$ is obtained as follows:

$$[c_{5,3}] = (1, 1, 1, 0, 0, 0, 0, 0, 0, 0)^T$$

Determination vectors corresponding to the other bit vectors $[f_{6,1}]$ to $[f_{6,3}]$, $[f_{7,1}]$ to $[f_{7,3}]$, and $[f_{8,1}]$ to $[f_{8,3}]$ are calculated in the same way.

The above determination vectors represent the number of times a combination of the category attribute value and the label value corresponding to the bit vector appears in each group. For example, the combination of (category attribute value, label value) = (5, 1) indicates that it appears 0 times in the first group, 0 times in the second group, one time in the third group, and 0 times in the fourth group. Similarly, for example, the combination of (category attribute value, label value) = (5, 2) indicates that it appears one time in the first group, 0 times in the second group, one time in the third group, and one time in the fourth group.

Therefore, from the above determination vectors, it is possible to calculate the frequency of records that take the label value k in the data set satisfying the division condition, among the data sets (sets of category attribute values) divided (grouped) by the division condition expressed by a form of x □ X (where X is a subset of the set of values that can be taken by the category attribute).

Next, the evaluation value calculation unit 103 calculates each frequency for each group and for each division condition (Step S104). Here, the evaluation value calculation unit 103 calculates the following four frequencies:

the number of elements in each group of the category attribute value vector [c] (that is, $|Q|$ shown in the above (1));
the number of elements of the label value k in each group of the category attribute value vector [c] (that is, $|Q_k|$ shown in the above (2));
the number of elements in each group obtained by dividing the group of the category attribute value vector [c] by the division condition $\theta$ (that is, $|Q(\theta, i)|$ shown in the above (3)); and
the number of elements of the label value k in each group obtained by dividing the group of the category attribute value vector [c] by the division condition $\theta$ (that is, $|Q(\theta, i)_k|$ shown in the above (4)).

Among these four frequencies, the first frequency is obtained by calculating the number of elements for each group using the category attribute value vector [c] and the group information vector [g]. In addition, the second frequency is obtained by calculating the number of elements for each group and for each label value using the category attribute value vector [c], the label value vector [y], and the group information vector [g]. In addition, the third frequency is obtained by calculating the number of elements of each set (that is, a set satisfying the division condition $\theta$ or a set not satisfying it) divided by the division condition $\theta$ when the group is divided by the division condition $\theta$ using the category attribute value vector [c] and the group information vector [g].

Meanwhile, the fourth frequency is obtained by calculating the number of elements taking the label value k in each set divided by the division condition $\theta$ when the group is divided by the division condition $\theta$ using the category attribute value vector [c], the group information vector [g], and the determination vector. This may be calculated by the determination vectors counting the number of times a combination of each element (category attribute value) included in the divided set and the label value k appears in the divided group. Specifically, for example, in a case where the division condition θ is x □ {5, 8}, the third group of the category attribute value vector [c] is divided into {5, 8, 5} and {7}. Therefore, for example, as described above, the number of elements taking the label value k in {5, 8, 5} is obtained by calculating the sum of the number of times a combination of (5, k) appears in the third group and the number of times a combination of (8, k) appears in the third group from the determination vectors $[f_{5, k}]$ and $[f_{8, k}]$. Similarly, for example, the number of elements taking the label value k in {7} is obtained by calculating the number of times a combination of (7, k) appears in the third group from the determination vector $[f_{7, k}]$.

Next, the evaluation value calculation unit 103 calculates the evaluation value of the division condition on the basis of Math. 10 for each group and for each division condition, by using each frequency calculated in Step S104 described above (Step S105).

Then, the output unit 104 selects a division condition that maximizes the evaluation value in each group, and outputs the selected division condition as the division condition to be set at a node corresponding to the group (Step S106). Note that, when selecting the division condition that maximizes the evaluation value in each group, for example, an aggregation function maximum value operation may be performed. The aggregation function maximum value operation is an operation of inputting elements (evaluation values) in the same group and outputting the maximum value among the values of the elements.

<Conclusion>

As described above, when learning a secret decision tree from a given data set of secret values, the secret decision tree test device 10 according to the present embodiment can reduce the total calculation time by collectively calculating the evaluation values of a plurality of division conditions at each node for the category attribute value. Specifically, in a case where a data set composed of n items of data is divided by a decision tree having m nodes, evaluations (tests) of Θ(mn) are required as a whole with the conventional technique, whereas the secret decision tree test device 10 according to the present embodiment can execute evaluation in O(nlogn) time.

The present invention is not limited to the above-described embodiment specifically disclosed, and various modifications, changes, combinations with known techniques, and the like are possible without departing from the description of the claims.

[Reference Signs List]

| | |
|---|---|
| 10 | Secret decision tree test device |
| 101 | Input unit |
| 102 | Vector calculation unit |
| 103 | Evaluation value calculation unit |
| 104 | Output unit |
| 105 | Storage unit |
| 201 | Input device |
| 202 | Display device |
| 203 | External I/F |
| 203a | Recording medium |
| 204 | Communication I/F |
| 205 | Processor |
| 206 | Memory device |
| 207 | Bus |

**Claims**

1. A secret decision tree test device configured to evaluate a division condition at each of a plurality of nodes of a decision tree when learning of the decision tree is performed by secret calculation, the secret decision tree test device comprising:

    an input unit configured to input a category attribute value vector composed of specific category attribute values of items of data included in a data set for learning of the decision tree, a label value vector composed of label values of the items of the data, and a group information vector indicating grouping of the items of the data into the nodes;

a frequency calculation unit configured to calculate, using the category attribute value vector, the label value vector, and the group information vector, a first frequency of data belonging to each group, a second frequency of data for each of the label values in said each group, a third frequency of data belonging to a division group obtained by dividing said each group by a division condition indicating a condition whether the category attribute value is included in a predetermined set, and a fourth frequency of data for each of the label values in the division group; and

an evaluation calculation unit configured to calculate an evaluation value for evaluating the division condition using the first frequency, the second frequency, the third frequency, and the fourth frequency.

2. The secret decision tree test device according to claim 1, wherein the frequency calculation unit calculates the third frequency and the fourth frequency in each of a plurality of the division conditions for said each group.

3. The secret decision tree test device according to claim 1 or 2, further comprising:

a bit vector creation unit configured to create, for each combination of a value that can be taken by the category attribute value and a value that can be taken by the label value, a bit vector indicating a position where the combination matches a combination of a category attribute value included in the category attribute value vector and a label value included in the label value vector at the same position; and

a determination vector calculation unit configured to calculate, for said each group indicated in the group information vector, a determination vector for determining a number of occurrences of the combination in said each group by performing an aggregation function total sum operation of each element included in the bit vector, wherein the frequency calculation unit calculates the fourth frequency using the determination vector.

4. A secret decision tree test system configured to evaluate a division condition at each of a plurality of nodes of a decision tree when learning of the decision tree is performed by secret calculation, the secret decision tree test system comprising:

an input unit configured to input a category attribute value vector composed of specific category attribute values of items of data included in a data set for learning of the decision tree, a label value vector composed of label values of the items of the data, and a group information vector indicating grouping of the items of the data into the nodes;

a frequency calculation unit configured to calculate, using the category attribute value vector, the label value vector, and the group information vector, a first frequency of data belonging to each group, a second frequency of data for each of the label values in said each group, a third frequency of data belonging to a division group obtained by dividing said each group by a division condition indicating a condition whether the category attribute value is included in a predetermined set, and a fourth frequency of data for each of the label values in the division group; and

an evaluation calculation unit configured to calculate an evaluation value for evaluating the division condition using the first frequency, the second frequency, the third frequency, and the fourth frequency.

5. A secret decision tree test method of evaluating a division condition at each of a plurality of nodes of a decision tree when learning of the decision tree is performed by secret calculation, the secret decision tree test method comprising:

an input procedure of inputting a category attribute value vector composed of specific category attribute values of items of data included in a data set for learning of the decision tree, a label value vector composed of label values of the items of the data, and a group information vector indicating grouping of the items of the data into the nodes;

a frequency calculation procedure of calculating, using the category attribute value vector, the label value vector, and the group information vector, a first frequency of data belonging to each group, a second frequency of data for each of the label values in said each group, a third frequency of data belonging to a division group obtained by dividing said each group by a division condition indicating a condition whether the category attribute value is included in a predetermined set, and a fourth frequency of data for each of the label values in the division group; and

an evaluation calculation procedure of calculating an evaluation value for evaluating the division condition using the first frequency, the second frequency, the third frequency, and the fourth frequency.

6. A program causing a computer to function as the secret decision tree test device according to any one of claims 1 to 3.

Fig. 1

Fig. 2

203a

RECORDING
MEDIUM

10

SECRET DECISION TREE TEST DEVICE

| 205 | 201 | 203 |
|---|---|---|
| PROCESSOR | INPUT DEVICE | EXTERNAL I/F |

207

| 206 | 202 | 204 |
|---|---|---|
| MEMORY DEVICE | DISPLAY DEVICE | COMMUNICATION I/F |

Fig. 3

```
                        ( START )
                            │
                            ▼
┌───────────────────────────────────────────────────┐
│  INPUT CATEGORY ATTRIBUTE VALUE VECTOR, LABEL VALUE │ ~S101
│  VECTOR, AND GROUP INFORMATION VECTOR               │
└───────────────────────────────────────────────────┘
                            │
                            ▼
┌───────────────────────────────────────────────────┐
│  CALCULATE BIT VECTOR INDICATING ELEMENT MATCHING   │
│  COMBINATION OF CATEGORY ATTRIBUTE VALUE AND LABEL  │
│  VALUE FOR EACH COMBINATION OF VALUE THAT IS ABLE TO│ ~S102
│  BE TAKEN BY CATEGORY ATTRIBUTE AND VALUE THAT IS   │
│  ABLE TO BE TAKEN BY LABEL                          │
└───────────────────────────────────────────────────┘
                            │
                            ▼
┌───────────────────────────────────────────────────┐
│  CALCULATE DETERMINATION VECTOR USING AGGREGATION   │ ~S103
│  FUNCTION TOTAL SUM OPERATION                       │
└───────────────────────────────────────────────────┘
                            │
                            ▼
┌───────────────────────────────────────────────────┐
│  CALCULATE FREQUENCY FOR EACH GROUP AND FOR EACH    │ ~S104
│  DIVISION CONDITION                                 │
└───────────────────────────────────────────────────┘
                            │
                            ▼
┌───────────────────────────────────────────────────┐
│  CALCULATE EVALUATION VALUE FOR EACH GROUP AND      │ ~S105
│  FOR EACH DIVISION CONDITION                        │
└───────────────────────────────────────────────────┘
                            │
                            ▼
┌───────────────────────────────────────────────────┐
│  OUTPUT DIVISION CONDITION IN WHICH EVALUATION VALUE│
│  BECOMES MAXIMUM IN EACH GROUP USING AGGREGATION    │ ~S106
│  FUNCTION MAXIMUM VALUE OPERATION                   │
└───────────────────────────────────────────────────┘
                            │
                            ▼
                        (  END  )
```

## INTERNATIONAL SEARCH REPORT

| International application No. |
| --- |
| PCT/JP2020/039127 |

### A. CLASSIFICATION OF SUBJECT MATTER

G09C 1/00(2006.01)i; G06N 20/00(2019.01)i
FI: G09C1/00 650Z; G06N20/00

According to International Patent Classification (IPC) or to both national classification and IPC

### B. FIELDS SEARCHED

Minimum documentation searched (classification system followed by classification symbols)
G09C1/00; G06N20/00

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | LINDELL, Yehuda, PINKAS, Benny, "Privacy Preserving Data Mining", Advances in Cryptology – CRYPTO 2000, Springer-Verlag Berlin Heidelberg, 11 August 2000, pp. 36-54, [online], [retrieved on 25 November 2020], Retrieved from <https://link.springer.com/chapter/10.1007/3-540-44598-6_3>, <doi: 10.1007/3-540-44598-6_3>, ISEN 978-3-540-44598-2, p. 36, abstract | 1–6 |
| A | WO 2019/208484 A1 (NIPPON TELEGRAPH AND TELEPHONE CORP.) 31 October 2019 (2019-10-31) paragraph [0008] | 1–6 |

☐ Further documents are listed in the continuation of Box C.   ☒ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 November 2020 (26.11.2020) | 08 December 2020 (08.12.2020) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

INTERNATIONAL SEARCH REPORT
Information on patent family members

International application No.

PCT/JP2020/039127

| Patent Documents referred in the Report | Publication Date | Patent Family | Publication Date |
|---|---|---|---|
| WO 2019/208484 A1 | 31 Oct. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

• **KOJI CHIDA ; KOKI HAMADA ; DAI IKARASHI ; KATSUMI TAKAHASHI.** Reconsideration of Light-Weight Verifiable Three-Party Secret Function Calculation. *CSS,* 2010